# EUROPEAN PATENT SPECIFICATION

(11) **EP 3 485 188 B1**
(45) Date of publication and mention of the grant of the patent: **29.04.2020**
(21) Application number: 17754809.6
(22) Date of filing: 14.07.2017
(51) Int. Cl.: F16L 1/20, B63B 35/03, B65D 19/00

(54) **INSTALLATION PALLET**
MONTAGEPALETTE
PALETTE D'INSTALLATION

(30) Priority: 15.07.2016 NL 2017175
(43) Date of publication of application: 22.05.2019
(73) Proprietor: Itrec B.V., 3115 HH Schiedam (NL)
(72) Inventor: VEHMEIJER, Terence Willem August, 3115 HH Schiedam (NL); DONKERS, Jeroen Adrianus Joseph, 3115 HH Schiedam (NL)
(74) Representative: EP&C
(86) International application number: PCT/NL2017/050478
(87) International publication number: WO 2018/012978

(56) References cited:
- EP-A1- 1 696 163
- WO-A2-2008/096107
- WO-A2-2009/153352

## Description

The present invention relates to a marine pipe laying system for installing an offshore pipeline that includes one or more accessories, more in particular to a device for transporting accessories to be mounted in the pipeline.
In most offshore pipelines to be laid on the seabed there is a need to install accessories (modules) on the ends of the pipeline and/or at one or multiple intermediate locations along the pipeline. These modules are usually quite large and heavy and are commonly designed to be welded to the pipeline. Examples of such accessories are: pipeline end terminations (PLET), initiation fittings, branches, inline SLED assemblies, inline manifolds, pipe valves, tee assemblies with their supporting structures and mud-mats.

Such pipeline accessories should often be welded inline with the pipeline. Often the accessory has pipeline connection parts at opposed ends thereof to connect the pipeline to those pipeline connection parts. It is however also known to have a pipeline accessory which is to be mounted, mostly by welding or using bolts, externally on the pipeline.

Various prior art solutions are known to mount an accessory at the end of a pipeline or at an intermediate location in or on a pipeline.

For example in WO 03/067019 a system for introducing an inline accessory into a pipeline is described. The pipelaying installation comprises a pipeline spool, a tensioner and a clamp, usually referred to as "hang-off clamp. The clamp is adapted to support the weight of the launched pipeline which is suspended from said clamp. Furthermore, this known system comprises a launch ramp, here having variable inclination, with a pipeline feeding position and an accessory connection position, arranged next to one another. The area in between the tensioner and the clamp can be used to install accessories into the pipeline. The clamp is capable of translating horizontally - while the launched pipeline is suspended therefrom - from the pipeline feeding position to the accessory connection position. Means are provided for lowering the pipeline and accessory connected thereto past the clamp.

For example in EP 1 696 163 discloses an accessory handling frame, comprising a pallet, for positioning an accessory in a firing line and enable the accessory to be connected to the pipeline.

An accessory can be placed on the pallet and be fixed thereto, e.g. by temporary welds or other detachable fixation device. The accessory handling frame is employed for handling accessories on board of a pipelaying vessel, such that different accessories can be handled in a uniform manner.

An accessory loader device is used to pivot the pallet into a substantially upright position, and onto an accessory handling device for positioning the pallet relative a launch ramp of a pipe lay tower, and thus introduce the accessory into a position that allows for the accessory to be mounted to a pipeline supported in the firing line.

Publication WO2009/153352 discloses a slideable mounted accessory handling frame. The accessory handling frame consists of a rail track with a pivotable section at one end thereof. A pallet can be moved along the track onto the pivotable section to be tilted in an upright position. The accessory handling frame is mounted on a track as well, to move it, and thus an accessory supported by it, adjacent an opening in a tower.

Typically, a tower is provided with slideably mounted platform sections which can be located into a position adjacent the firing line to provide a working platform that allows for welding and other operations to be carried out on the accessory. For example WO2008/096107 discloses a pipe lay tower provided with slideably mounted platform sections.

The known techniques for inserting an accessory into or at the end of a pipeline while laying an offshore pipeline are unsatisfactory.

The object of this invention is to provide an improved technique and associated system for laying an offshore pipeline and fitting one or more pipeline accessories into or onto a pipeline, e.g. at the end and/or at intermediate locations of the pipeline.

The present invention provides a system according to claim 1.

An accessory installation pallet for handling accessory on an off-shore vessel, according to the invention comprises:
- a pallet frame, which pallet frame provides the pallet with structural rigidity and which pallet frame is provided with fixating devices for securing an accessory, e.g. a PLET, to the pallet, wherein
   the pallet frame is furthermore provided with one or more coupling devices adapted to couple the pallet with a PLET handler, to allow the PLET handler to pivot the pallet from a horizontal transport position into an upright support position, and
   which pallet frame has a support side, which support side faces the accessory when the accessory is mounted on the pallet, and a transport side, which transport side faces away from the support side, and at which transport side the pallet frame is configured as a skid frame for transporting, i.e. skidding, to enable transport of the accessory over the deck of the off-shore vessel; and
- multiple pivotable deck sections, which pivotable deck sections are pivotably mounted in the pallet frame, such that each deck sections can pivot between a folded position, in which the deck section is located adjacent the pallet frame, preferably within the pallet frame, and an extended position, in which the deck section at the support side of the pallet frame extends in a direction away from the pallet frame.

The invention provides an installation pallet that enables standardised transport of accessories and equipment. The pallet is a transport platform that is adapted to enable transport by skidding and to be manipulated by PLET handlers and cranes. Furthermore, the installation pallet provides a mounting surface for different types of accessories, tooling and constructions. Thus, the pallet can be employed for handling accessories and equipment on board of a pipelaying vessel, such that different accessories and equipment can be handled in a uniform manner.

The pallet is furthermore adapted to provide work stations, i.e. is provided with pivotable deck sections that can be set in an extended position when the installation pallet is supported in its upright support position, to thus provide work stations. Thus, the installation pallet is able to provide additional and easy access to the firing line of a pipelaying tower.

It is to be noted that the pipe laying process does not allow for extensive work stations of a permanent nature along the firing line. The pipe line, accessories introduced in the pipeline, and equipment required to handle the pipe line make that the space around the firing line is limited and at times is occupied by the pipe line and accessories provided therein.

By providing the works stations in the form of a installation pallet that can be handled by a PLET handler, the work stations can be introduced and removed quickly and efficiently using the PLET installation system already present on a pipelaying vessel. Furthermore, the installation pallet is provided with multiple pivotable deck sections, and allows for mounting tooling and/or equipment to the installation pallet. Thus, the installation pallet can be configured to match a specific type of job to be performed in or adjacent the firing line.

The installation pallet according to the invention is provided with interface points that allow for manipulation of the pallet by PLET handler equipment. In particular, the pallet frame is provided with one or more coupling devices adapted to couple the pallet with a PLET handler, to allow the PLET handler to pivot the pallet from a horizontal transport position into an upright support position. It is submitted that coupling devices used for coupling a PLET to a PLET handler are known to the person skilled in the art, and are thus not elaborated upon.

It is noted that if the PLET handler is provided with a PLET alignment device, for adjusting the position of the PLET relative to the firing line, for example to compensate in variations of pipe line diameter, PLET dimensions, etc., this PLET alignment device can also be used for adjusting the position of an installation pallet held by the PLET handler adjacent or in the firing line. Thus the PLET alignment device can be used to position the installation pallet, when in its support position, relative to the firing line, and for example can be used to move deck sections towards or away from the firing line.

It is noted that pipelaying vessels are equipped with PLET handler systems that fit the configuration of the pipe laying tower. In some case the vessel is provided with a PLET handler that is able to pivot a PLET into an upright position and directly into the firing line. In alternative cases, the PLET handler system comprises a PLET handler that is configured to pivot the PLET into an upright position and hand it over to a further PLET handler transport system for transporting the PLET from the PLET handler into the fringing line. Both type of PLET handler systems allow for use of a installation pallet according to the invention. In the first embodiment of the PLET handler system, the installation pallet is supported adjacent the firing line by the actual PLET handler, in the second embodiment of the PLET handler system, the installation pallet is supported adjacent the firing line by the PLET handler transport system. Thus, when herein it is mentioned that the installation pallet is supported adjacent the firing line by the PLET handler, this can refer to the actual PLET handler or to the PLET handler transport system.

In an embodiment, the installation pallet is adapted to be coupled with a PLET handler located at the transport side of the installation pallet. In an alternative embodiment, the installation pallet is configured to be coupled with a PLET handler located at the support side of the installation pallet. In such an embodiment, the PLET handler may be provided with coupling devices that are configured to engage the sides and/or corners of the installation pallet and/or with arms that enable the PLET handler to engage the installation pallet from the transport side, passing equipment located on the installation pallet. In an embodiment, the installation pallet is provided at its transport side with a, preferably removable, frame construction, which frame construction extends beyond the equipment mounted on the pallet, an is configured to be engaged by the PLET handler. Such a frame is for example known from EP1696163.

In an embodiment in which the PLET handler is configured to pivot a PLET directly into the firing line, the installation pallet can also be used to provide a working platform adjacent the firing line while the PLET handler is in its lowered position and the installation pallet is in its transport position mounted onto the PLET handler. Thus, the installation pallet can for example be used to introduce tooling or shipping containers comprising consumables near the firing line, converting the PLET handler in a working station.

The pivotable deck sections can be secured in their folded positon as well as in their extended position. In a preferred embodiment, the deck sections can be secured in additional positons as well, for example in positions intermediate the folded position and the extended position.

In an embodiment of a installation pallet according to the invention, one or more of the pivotable deck sections can be locked in intermediate positons, i.e. in one or more positions between the folded position and the extended position, to provide a horizontal working deck when the pallet is supported in an inclined position.

Thus, the deck sections can be secured at different angles to the pallet frame, such that when the pallet frame is supported adjacent to a vertical firing line, but tilted relative to that firing line, or adjacent and parallel to a tilted firing line, the deck sections can be set in a horizontal position, i.e. provide a horizontal working deck.

Preferably, the installation pallet is provided with actuators, e.g. hydraulic actuators, for pivoting the deck sections between their folded position and their extended position. Also, one or more drives, actuator systems comprising wires and/or hinge systems, gears racks, etc. can be used for pivoting the deck sections. Preferably, the pallet is configured such that the deck sections can be pivoted individually. Thus, the configuration of the installation pallet, i.e. which deck sections are in the extended position and which are in the folded position, can be made to fit the particular requirements of a job. In an alternative embodiment, the deck sections need to be set for example using a crane.

Preferably, in the folded position, the deck sections provide a support deck or mounting platform for securing accessories and equipment to the pallet. Thus, the invention provides a flexible installation platform, i.e. an installation pallet configured to support different types of equipment, and that can be used to introduce and support that equipment adjacent or in the firing line.

Thus, the installation pallet can also be used to transport and position heavy equipment in the firing line. Equipment that is not always required, such as pipe facing machines can be installed on the installation pallet off-site, and subsequently be transported and introduced into or adjacent the firing line using the installation pallet. This makes it possible to mobilize very heavy equipment such as an automatic piggyback machine without the use of a crane.

Also, the installation pallet can be used to mount equipment in the form of installations. For example, during straightening trials or pipe diameter changes in the pipeline significant lengths of pipe have to be scrapped and removed from the firing line. The cut pipe sections are conventionally removed one by one using a crane. This operation can be performed more time efficient by equipping the installation pallet with scrap pipe collecting container, for example collecting crates. Thus, the pipe can be spooled directly into the container and be cut at the top of the container when the pipe end reaches the bottom of the container. Also, the pallet may be provided with hoisting equipment, preferably utilizing a hoisting beam that is part of the pallet, for supporting and moving cut of sections of pipe and or accessories from a position in or adjacent the firing line into a container, which container preferably is mounted on the pallet, for temporary storage or removal.

One of the pivotable deck sections can be employed to provide a work station for cutting the pipe. Preferably, the container can be aligned with pipe using the position capabilities of the PLET handler. When the container is full the PLET handler will position the installation pallet such that the next container is in position. When all containers are full the pallet with the containers can be lowered on deck using the PLET handler and skidded to a location where it can be unloaded or stored. In an alternative embodiment, a single container comprising multiple compartments can be used for collecting sections of pipe.

In an embodiment, when the pallet is in its horizontal transport position, one or more deck sections can be set in their extended position to provide the pallet with separated support zones, and/or to provide upright supports to secure accessories and equipment. For example, equipment can be secured against a pivotable deck section in the extended position, which deck sections will form the support of that piece of equipment when the pallet is in its upright support position. Thus, the equipment is optimally secured and supported during transport, during the pivoting of the pallet from its transport position into its upright support position, and while it is supported by the pallet in or adjacent the firing line.

In an embodiment of a installation pallet according to the invention, one or more of the pivotable decks sections are provided with fixating devices, e.g. mounting openings such as pad eyes or channels for securing mounts, container twist locks, clamping devices, etc, for securing equipment to the deck sections, preferably such that the deck sections can be pivoted between the folded position and the extended position while supporting the equipment. In an embodiment both the pallet frame and the deck sections are provided with fixating devices for securing equipment onto the deck sections.

It is common that a large amount of consumables, such as anodes, VIV-strakes and piggyback saddles, has to be transported to a workstation adjacent the firing line. This logistics usually involves frequent cranage in a crowded work area. Containers comprising tooling and/or equipment to be used at the firing line can be mounted on the installation pallet, preferably on a deck section of the installation pallet, and thus be introduced in combination with the temporary work stations provided by the deck sections, into or adjacent the firing line.

For example, coating and blasting equipment can take up a large amount of valuable space in the work area and is not frequently required in the pipe laying process, in particular the reel laying process. If this equipment is containerized it can be installed on the installation pallet at a location away from the working area, and be transported from storage to the working area once required using the installation pallet.

Also, appurtenances on the pipeline such as buoyancy cans and VIV strakes can be large and heavy and difficult to transport to and install on the pipeline. Such items can be lashed onto these deck sections when the pallet is on deck outside of the work area. The installation pallet with the appurtenances is than skidded towards the PLET handler and is positioned adjacent the firing line using the PLET handler. Once the installation pallet is in place, the items can be attached to a pipe line supported in the firing line.

In case of for example buoyancy cans, the items can be mounted to the different deck sections of the installation pallet such that a vertical row of items is provided when the installation pallet is in its upright position adjacent the firing line, and the deck sections are in their extended position. Thus, for example, the items can be attached to the pipeline one by one starting with the lowest item. Once an items has been attached to the pipeline, the empty deck section is folded from its extended position into its folded position in the installation pallet so that the pipe line with the item attached to it can be lowered without the item colliding with the deck section. Once a predetermined section of pipeline has been lowered, the next item is attached to the pipeline, the deck section is pivoted into its folded position, etc.

In an embodiment, and the deck sections are provided with actuators, e.g. hydraulic cylinders or motors, that can pivot the deck sections between the folded position and the extended position while equipment is secured to the deck sections. In such an embodiment, when the installation pallet is in its horizontal transport position, equipment and accessories can be mounted in an upright position to a pivotable deck section in its folded position. When the installation pallet has subsequently been pivoted into its upright positon, the pivotable deck section can be pivoted into its extended position, bringing the equipment into its upright position. in a further embodiment, the installation pallet is configured to pivot the deck sections while the pallet is being pivoted, thus allowing equipment secured to the deck section to be kept in a substantially upright position during the pivoting process.

It is noted that a PLET typically is provided with a rectangular foot print. Therefore, the installation pallet according to the invention preferably is provided with a rectangular lay out, for thus providing optimal support for a PLET and to thus allow for an optimal fit for PLET handlers and other PLET handling systems provided on the vessel.

The installation pallet according to the invention preferably has a length and a width, the width being smaller than the length, preferably less than two third of the length, for example half the length.

The installation pallet according to the invention is dimensioned such that it can support a PLET, more in particular can act as an intermediate between the PLET and PLET handling systems. The installation pallet is preferably dimensioned such that it allows for two shipping containers to be mounted thereon, preferably two shipping containers.

Thus, the installation pallet allows for equipment with standardised dimensions to be mounted thereupon, and thus enables equipment with standardised dimensions, for example shipping containers configured as a workstation, to be handled by PLET handling systems, more in particular to be introduced into the firing line using a PLET handler.

In an embodiment the installation pallet is equipped with standard container twist locks to support two standard 20ft or 30ft containers. The containers can for example be provided with consumables and/or be configured as a work station. The containers can be lowered on and mounted to the installation pallet away from the work area and be transported to the firing line using the PLET handling system.

It is submitted that equipment mounted on the PLET pallet, may be allowed to extend beyond the contour of the pallet. Thus, for example, the pallet can be used to support a PLET having a length larger than the length of the pallet.

Preferably, the pivotable deck sections extend along the width of the installation pallet, and are pivotable about a pivot axis that extend in a direction perpendicular to a longitudinal axis of the installation pallet.

In an embodiment of an installation pallet according to the invention, one or more of the pivotable deck sections comprise a deck section support frame, which deck section support frame is pivotably mounted to the pallet frame, and one or more deck panels, e.g. a combination of beams and grating or metal sheets providing a surface, mounted to the deck section support frame to provide a deck surface.

In a further embodiment, the deck panels are configured to be partially removed, to thus enable the shape of the deck section to be adapted to fit articular job requirements.

In an embodiment single pivotable deck sections extend from one side of the installation pallet to the opposite side of the installation pallet. In an alternative embodiment, one or more of the pivotable deck sections are split deck sections. For example instead of a single pivotable deck section, two adjacent pivotable deck sections can be provided, one left pivotable deck section and one right pivotable deck section. Such an embodiment for example allows for only pivoting the left deck section into the extended position while keeping the right deck section in the extended position.

Thus, in such an embodiment, when the installation pallet is positioned adjacent the firing line and only the right or only the left pivotable decks sections are employed, i.e. are in the extended position, only along respectively the right or the left side of the firing line work platforms are provided.

In an embodiment of an installation pallet according to the invention, one or more of the pivotable deck sections, preferably the deck section support frame of the pivotable deck section, are provided with mounts and/or hoisting devices, e.g. chain tackles, hoists, etc., such that they can function as a hoisting beam when in the unfolded position.

Preferably, the deck sections are equipped with a hole pattern in the deck section support frame, such that the deck sections, when in the extended position, provide a large number of hoisting points, for example to support standard chain tackles, along the firing line at multiple levels.

In an embodiment of an installation pallet according to the invention, the one or more of the pivotable decks sections are provided with mounts, e.g. mounting openings, for mounting railing to the deck sections when in the extended position.

In an embodiment, the deck sections are provided with folding railings, that are hingebaly connected to a deck section such that they can pivoted into an active position, in which they provide the deck section in its extended position with a railing, and into a folded position, in which they are received in the deck section and allow the decks section to be pivoted into and out of its folded position.

In an embodiment of an installation pallet according to the invention, one or more of the pivotable decks sections are at one end, preferably the end facing the firing line when the installation pallet is in its support position supported adjacent the firing line, provided with an opening for receiving a tubular, e.g. a pipe, tubing or cable, supported in a firing line.

Preferably, the opening is U-shaped, thus, the deck portions can provide access along 180 degrees of the pipe, and/or can be used to center the pipeline relative to the deck section and optionally to any equipment mounted on the installation pallet, in particular the respective deck section of the installation pallet. Furthermore, this allows for the pallet to be moved into and out of position adjacent the firing line, while a tubular is supported in the firing line, thus moving the tubular respectively into and out of the U-shaped openings of the pivotable deck sections.

In an embodiment, the pivotable deck sections are pivotable about a pivot axis parallel to the a side of the pallet frame, preferably a short side, of the pallet frame, more preferably a top side or bottom side when the pallet frame is in the upright position.

In an embodiment, the deck section is furthermore provided with a door section that can be used to close the entry port of the receiving opening, and thus secure tubular within the receiving opening, thus stabilizing the position of the tubular relative to the deck section, in particular relative to equipment mounted on the deck section for working on the tubular, for example welding or blasting equipment.

In a preferred embodiment, rollers and/or clamping devices are provided on the deck section adjacent the receiving opening to guide the tubular relative to the deck section and to fixated the position, in the horizontal plane, of the tubular relative to the deck section.

In addition, or as an alternative, the installation pallet can be provided with tubular positioning equipment, for example in the form of arms with engagement means for engaging the tubing, which arms are mounted on the pallet or are mounted to the pallet such hat they can be moved, for example pivoted, between a passive position adjacent, preferably within, the pallet, and an active position, in which the engagement means can engage a tubular supported n a firing line adjacent the installation pallet to fix the position of the tubular relative to the installation pallet. In a further embodiment, the tubular positioning equipment is configured to position the tubular relative to the installation pallet, for example to compensate for a position adjustment of the installation pallet relative to the firing line by the PLET handler, in particular by a PLET alignment device of the PLET handler.

In an embodiment of an installation pallet according to the invention, the installation pallet comprises one or more hoist beams, which hoist beams are pivotably mounted to the pallet frame such that they can be pivoted between a folded position, in which the hoist beam is located adjacent the pallet frame, preferably within the pallet frame, and an extended position, in which extended position the hoist beam at the support side of the pallet frame extends in a direction away from the pallet frame, to enable hoisting of equipment when the pallet is held in the support position.

In an embodiment, two hoisting davits are installed at one end of the installation pallet, preferably the end being the top end when the installation pallet is in its upright support position. The davits for example consist of an I-shaped beam that can hinge to position it in the horizontal plane (assuming that the pallet is in supported in its upright position). The beams are stored flat on the pallet when not in use. The beam is equipped with a trolley hoist that travels along the beam.

In a preferred embodiment, the hoist beam has a length such that when in its unfolded position it extends, in a direction away from the pallet frame, beyond the pivotable deck sections in their extended position, to thus enable to lift and lower objects along the pivotable deck sections, in particular along the side of the deck sections facing the firing line when the installation pallet is supported adjacent the firing line.

In an embodiment of an installation pallet according to the invention, the pivotable deck sections, when in the folded position, are flush with each other such that together they provide the pallet with a support surface for supporting equipment, which support surface preferably is flush with a top side of the pallet frame.

In such an embodiment, preferably, the hoisting beams, if provided, are located below said support surface when the pallet is in the horizontal position and the hoisting beams are in the folded position.

In an embodiment of an installation pallet according to the invention, the pallet frame comprise two longitudinal side beams, and multiple cross beams connecting the longitudinal side beams, the side beams extending along the length of the pallet frame, which side beams preferably provide a skid surface at the transport side of the pallet frame, and preferably provide a mount on the opposite side.

In an embodiment of an installation pallet according to the invention, the longitudinal side beams with one side form the upper most part of the pallet and with an opposite side form the lower most part of the pallet when the pallet is in its transport position and the pivotable decks sections are in the folded position.

In an embodiment of an installation pallet according to the invention, the pallet, in particular one or more of the pivotable deck sections, comprise a passage opening, preferably in combination with a door or panel that can be mounted in the opening for closing the passage opening, that allows for a person to pass through the pallet from the transport side to the support side, to provide a person access to a deck section when the pallet is held in the support position. Such a passage facilitates personnel to move from the transport side, which typically faces the vessel when the installation pallet is supported in its upright support position, to the support side, which typically faces away from the vessel and towards the firing line when the installation pallet is supported in its upright support position, of the installation pallet, and vice versa. The passage thus facilitates personnel to move from the vessel to a working station, preferably a working station provided by deck section of the installation pallet pivoted into its extended position, and vice versa.

In an embodiment, the installation pallet also provides in ladders, preferably integrated in the installation pallet and/or fixed to the pallet frame, which ladders enable personnel to move between deck sections located one above the other, when the installation pallet is held in its support position
In an embodiment of an installation pallet according to the invention, the pallet comprises one or more pivotable deck sections, which pivotable deck sections are pivotable mounted in the pallet frame, such that each deck sections can pivot between a folded position, in which the deck section is located adjacent the pallet frame, preferably within the pallet frame, and an extended position, in which the deck section at the transport side of the pallet frame extends in a direction away from the pallet frame. Such a pallet would provide deck sections that, when the installation pallet is supported in its installation position adjacent the firing line, face the PLET handler. Thus, it depends on the configuration of the PLET handler if these decks sections can be pivoted into their extended position. Preferably, the PLET handler is configured to allow one or more of these deck sections to be extended.

In a preferred embodiment, the pivotable deck sections at the transport side of the installation pallet are provided at substantially the same level as the pivotable deck sections located at the support side of the installation pallet. In a preferred embodiment, the installation pallet is furthermore provided with one or more access openings that allow for personnel to move from a pivotable deck section at the transport side of the installation pallet a pivotable deck section located at the support side of the installation pallet.

In a further preferred embodiment, one or more of these deck sections located at the transport side of the installation pallet can, when in the extended position, be used as an access ramp for personnel, to access the deck sections of the installation pallet from the vessel, and/or from access platforms provided in the PLET handler supporting the installation pallet.

In an embodiment of a installation pallet according to the invention, the pallet comprises hydraulic actuators for pivoting the pivotable deck sections between the folded position and the extended position relative to the pallet frame, which actuators preferably comprises connectors, preferably quick connect connectors, for connecting the actuators to connectors, preferably quick connect connectors, preferably located in the PLET handler, of a hydraulic power source.

The invention further relates to a PLET handling system as described herein, as well as the use thereof in a method for laying offshore pipelines.

The invention provides a PLET handling system comprising a PLET handler and an installation pallet according to the invention, which installation pallet is adapted to couple with the PLET handler such that the PLET handler can pivot the installation pallet between its transport position and its support position.

In an embodiment of a PLET handling system according to the invention, the PLET handler is provided with skid rails which allow the installation pallet to be skidded onto the PLET handler when the PLET handler is in a lowered position, which rails preferably are aligned with rails on the deck of a vessel when the PLET handler is in the lowered position such that the pallet frame can skid from the deck onto the PLET handler and vice versa. In an embodiment the deck that is aligned with the PLET handler is the main deck of the vessel. In an alternative embodiment, the deck that is aligned with the PLet handler is a raised deck, which raised deck may be a deck dedicated for providing access to the PLET handler and for transporting equipment to and from the PLET handler.

In an embodiment of a PLET handling system according to the invention, the PLET handler comprises a tiltable lift arm, and a support bed, which support bed is adapted to couple with the installation pallet, and which support bed is pivotably supported by the lift arm at one end and is connected to the lift arm via hydraulic cylinders at an opposite end, which hydraulic cylinders enable pivoting of the bed relative to the lift arm to align the bed, and thus the installation pallet coupled with the bed, relative to the firing line.

In an embodiment of a PLET handling system according to the invention, the PLET handler is provided with an alignment system, for aligning the installation pallet, and thus the PLET located on the pallet, relative to the firing line.

In an embodiment according to the invention, In an embodiment of a PLET handling system according to the invention, the PLET handler comprises a tiltable lift arm and a support bed, and the support bed comprises an alignment system. In such an embodiment, the bed may comprise a base frame, which base frame is pivotably supported by the tiltable lift arm, and a top frame adapted to couple with the installation pallet, and between the base frame and the top frame is provided an alignment system.

In an embodiment, the PLET handler comprises a tiltable lift arm, and a support bed, and the tiltable lift arm is pivotably mounted to a base of a pipe lay tower, e.g. a tiltable pipe-lay tower. When the titlable lift arm is pivotably mounted on the base of a tiltable tower, the PLET handler moves with the tower when the tower is tilted. In an alternative embodiment, the tiltable lift arm is pivotably mounted to a vessel, adjacent to a base of a tower vessel. Thus, in the tower can be a pivotable tower that can be pivoted without moving the PLET handler. In another embodiment, the PLET handler is used in combination with a tiltable support pipe-lay tower, and the tiltable lift arm and the tower are mounted on the same pivot axis.

Furthermore, in an embodiment of a PLET handler system according to the invention, the support bed is configured to engage a pallet frame and not a PLET directly. Thus, the PLET handler can only handle a PLET, e.g. pivot a PLET from a horizontal position into an upright position, when it is mounted on the pallet.

In a preferred embodiment, the PLET handler and the pallet are provided with coupling devices that are configured to position the pallet in a predetermined position on the PLET handler, prior to it being fixed to the PLET handler. For example, one or more stops can be provided that abut the pallet when it is slid onto the handler, and thus position it correctly for being fixed to the PLET handler, and for being pivoted through an opening in a tower by the PLET handler.

The invention further relates to a pipelaying vessel provided with a PLET handling system according to the invention.

In an embodiment of a vessel according to the invention, the vessel comprises a pipe-lay tower, e.g. a J-lay tower, preferably a pivotable pipe-lay tower, and a PLET handler for bring a PLET into the firing line.

In an embodiment of a vessel according to the invention, the vessel comprises a J-lay tower, preferably a pivotable J-lay tower, and a PLET handler for bring a PLET into the firing line. In an embodiment of a vessel according to the invention, the pipe-lay tower comprises an A-frame, and the PLET handler is configured to introduce a PLET into the firing line through an access opening defined by the A-frame of the pipe-lay tower.

The present invention further relates to a method wherein the inventive system is used.

In an embodiment, the present invention provides a method for providing a working platform adjacent a firing line, which comprises the steps:
providing an accessory installation pallet according to the invention;
pivoting the installation pallet from a transport position, in which the installation pallet has a substantially horizontal orientation, into an support position, in which the installation pallet has a substantially vertical orientation;
supporting the accessory installation pallet in the support position adjacent the firing line;
pivoting at least one of the one or more pivotable deck sections into the extended position, such that the at least one pivotable deck section provides a working platform adjacent the firing line.

In a further method, the installation pallet provided comprises one or more hoisting beams and the method further comprising the steps:
pivoting the hoisting beam from a folded position into an extended position; and
hoisting accessories and/or equipment parallel to the firing line.

There is also provided a non-claimed method for introducing a set of appurtenances , buoyancy cans or VIV strakes, into the firing line. The method comprises fixing a series of appurtenances on the pallet, preferably each on a deck section, in a position that enables the appurtenance to be coupled to a tubular supported in the firing line. Subsequently, the pallet is upended into an upright position and is positioned adjacent the firing line, such that the appurtenances are positioned relative to the tubular supported in the firing line for attaching them to the tubular. When the pallet provides multiple deck sections, the mounting of the appurtenances can be done in parallel, i.e. all decks can be used at the same time. Thus, with a method according to the invention, multiple appurtenances can be introduced adjacent a tubular supported in the firing line, and can be fixed to that tubular in parallel instead of in sequential order, which saves time and effort. In a further method, a second pallet is already provided with further appurtenances for introduction in the firing line, so that when the appurtenances haven been fixed the tubular the pallet can be removed, the tubular can be lowered and the second pallet can be introduced adjacent the firing line for mounting the second set off appurtenances to the tubular.

It is submitted that the same method, but in reverse order, can be used for efficiently removing appurtenances from a tubular.

Furthermore, the method can be used to efficiently introduce series of other devices adjacent a tubular supported in the firing line for mounting them onto that tubular.

Advantageous embodiments of the installation pallet according to the invention, the PLET handling system, the vessel according to the invention and the method according to the invention are disclosed in the sub claims and in the description, in which the invention is further illustrated and elucidated on the basis of a number of exemplary embodiments, of which some are shown in the schematic drawing.

In the drawings:
Fig. 1 schematically shows a side view of an installation pallet according to the invention, with an accessory secured thereto, which installation pallet is supported by a PLET handler in a support position adjacent a J-lay tower;
Fig. 2 shows a perspective view of the installation pallet with a PLET secured thereto, which installation pallet is supported by a PLET handler in a support position;
Fig. 3 shows a perspective view of the installation pallet with multiple pivotable working decks in an extend position, and a pipeline supported in a firing line;
Fig. 4 schematically shows a side view of the installation pallet of Fig. 3, with the multiple pivotable working decks in an extend position, being supported by a PLET handler in a first working position adjacent the firing line;
Fig. 5 schematically shows a side view of the installation pallet of Fig. 3, with the multiple pivotable working decks in an extend position, being supported by a PLET handler in a second working position away from the firing line;
Fig. 6 shows a perspective view of the installation pallet of fig. 2 in a support position with one pivotable working deck and two hoisting beams in an extended position;
Fig. 7 shows a perspective view of the installation pallet of fig. 2 in a support position with all pivotable working decks in an extended position, and a pipeline supported in a firing line;
Fig. 8 shows a perspective view of the installation pallet of fig. 2 in a support position with one pivotable working deck in an extended position, configured for supporting pipe sections;
Fig. 9 schematically shows a side view and top view of an alternative installation pallet configured for supporting pipe sections;
Fig. 10 shows a perspective view of an installation pallet according to the invention with two shipping containers secured thereto, which installation pallet is supported in its transport position by a PLET handler;
Fig. 11 schematically shows a side view of the installation pallet of fig. 10:
Fig. 12 shows a side view of an alternative embodiment of a PLET handing system according to the invention, the PLET handling system comprising an installation pallet and a PLET handler;
Fig 13 shows a rear view, facing the PLET handler, of the PLET handling system of Fig. 12;
Fig 14 again shows rear view, facing the PLET handler, of the PLET handling system of Fig. 12;
Fig 15 shows a perspective view of the PLET handling system of Fig. 12;
Fig. 16 shows the PLET handler system of Fig. 12 in a first position;
Fig. 17 shows the PLET handler system of Fig. 12 in a second position;
Fig. 18 shows the PLET handler system of Fig. 12 in in combination with a raised deck and a second installation pallet.

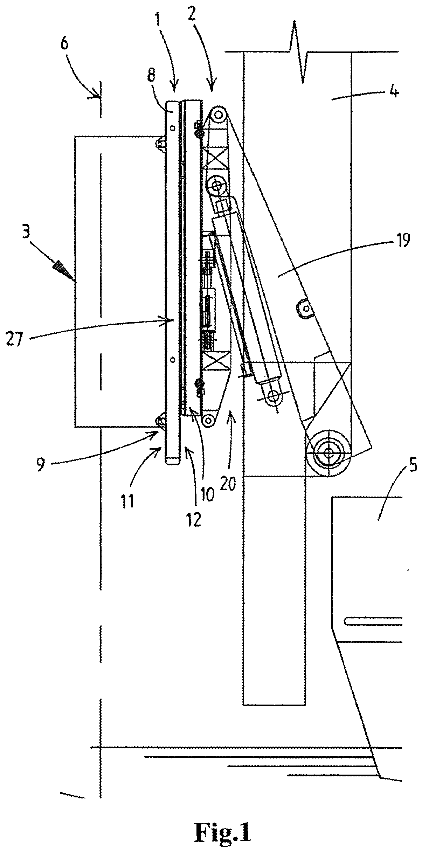

Fig. 1 schematically shows a side view of an installation pallet 1 according to the invention, with an accessory 3 secured thereto. The installation pallet 1 is supported by a PLET handler 2 in a support position adjacent a J-lay tower 4, which J-lay tower is mounted on an off-shore vessel 5, is partially shown and is shown in see through. The PLET handler 2 supports the installation pallet 1 such accessory 3 is located in the firing line 6 of the J-lay tower 4.

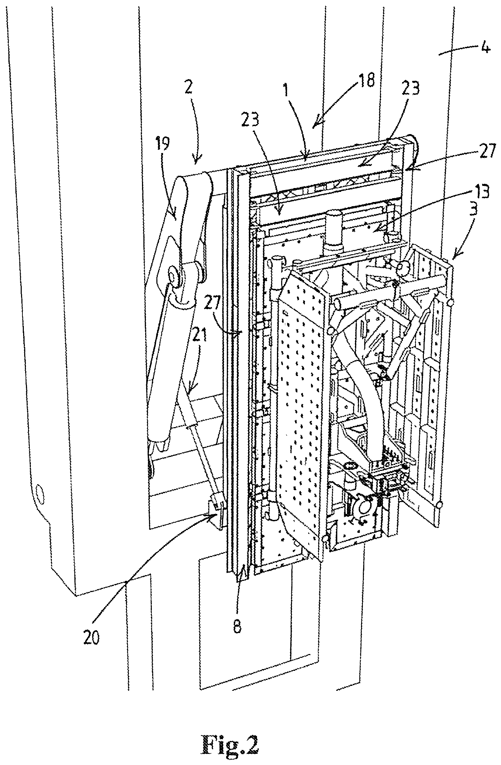

Fig. 2 shows a perspective view of the installation pallet 1 with a PLET 7 secured thereto. The installation pallet 1 is supported by a PLET handler 2 in a support position. In the Fig. 2 the vessel is not depicted. Only part of the J-lay tower 4 is depicted. In the embodiment shown, the J-lay tower 4 comprises an A-frame, and the PLET handler 2 is configured to introduce a PLET, and thus the installation pallet 1,through an access opening defined by the A-frame of the J-lay tower.

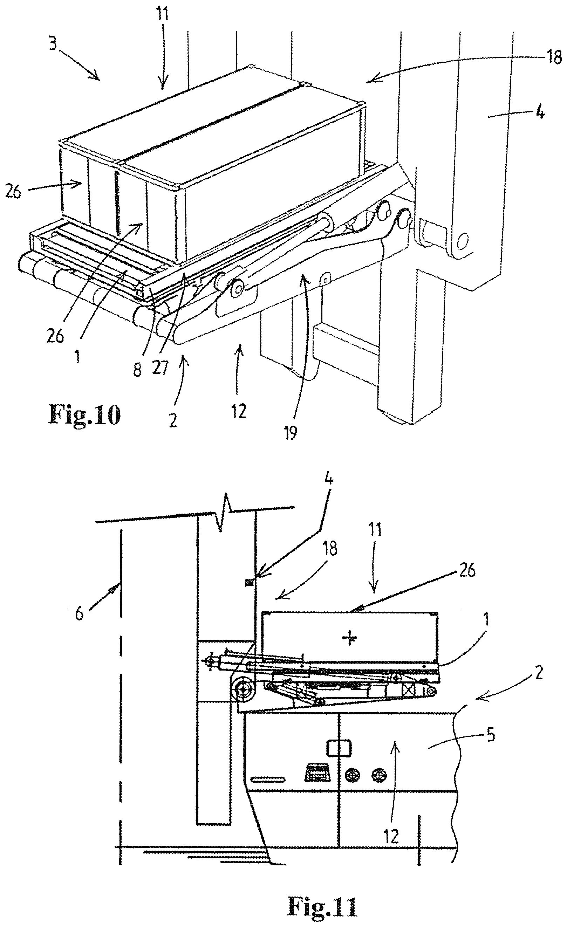

As a comparison, Fig. 10 depicts the installation pallet 1 according to the invention in its support position, in which it is supported horizontally, and is located on the opposite side of the J-lay tower compared to the support position in in which the installation pallet 1 is depicted in Figs. 1 and 2.

In Fig. 10 two shipping containers 26 are secured to the installation pallet 1. Fig. 11 schematically shows a side view of the installation pallet 1 of fig. 10

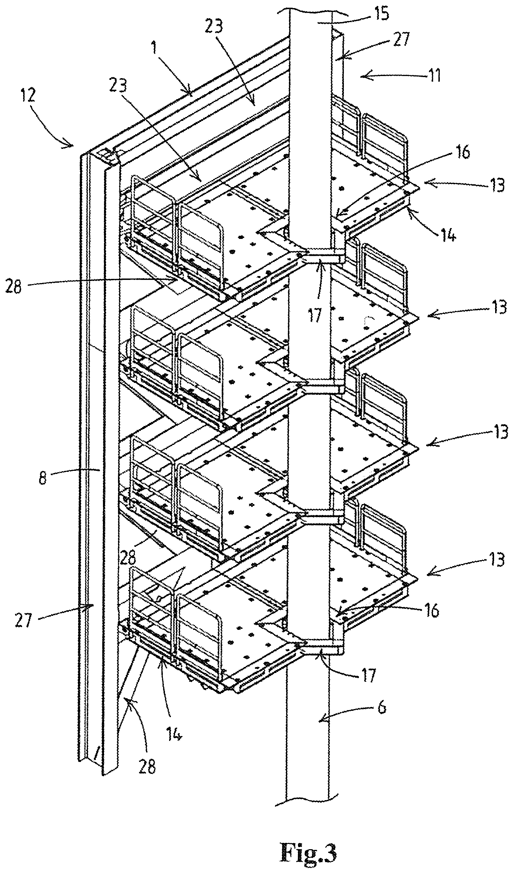

Fig. 3 shows a perspective view of the installation pallet 01 with multiple pivotable working decks 13 in an extend position, and a pipeline 15 supported in the firing line 6. Vessel and J-lay tower are not depicted in Fig. 3.

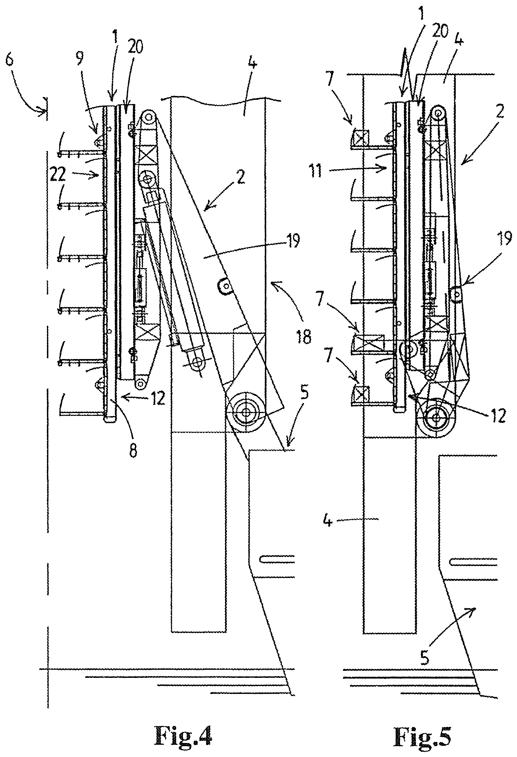

Fig. 4 and Fig. 5 schematically shows a side view of the installation pallet 1 of Fig. 3. In both figures, the installation pallet 01 is supported by the PLET handler 2 in the support position, with the multiple pivotable working decks 13 in the extend position.

In fig. 4, the installation pallet 1 is supported in a first working position adjacent the firing line. In fig. 5, the installation pallet is supported in a second working position away from the firing line.

According to the invention, the installation pallet 1 comprises a pallet frame 8. The pallet frame 8 provides the installation pallet 1 with structural rigidity.

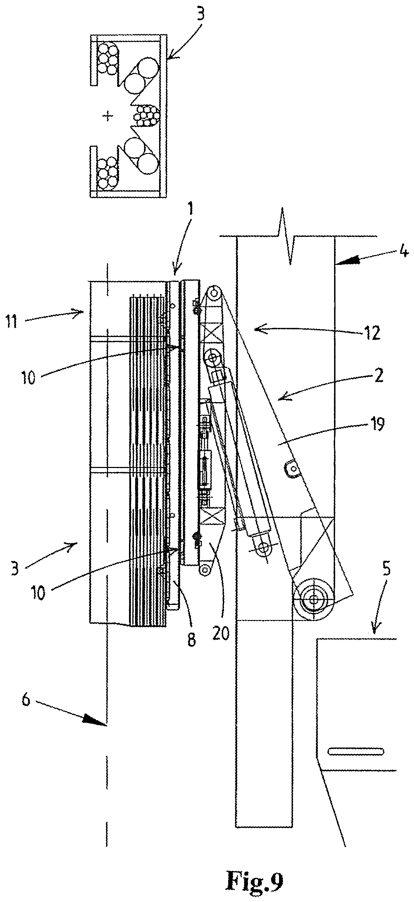

The pallet frame 8 has a support side 11, which support side faces the accessory 3 mounted on the pallet 1, and a transport side 12, which transport side faces away from the support side. When the pallet 1 is in the transport position, e.g. shown in Fig. 10, the support side 11 is the top side of the pallet and the transport side 12 is the bottom side of the pallet. In the upright position, e.g. shown in Fig. 9 the support side faces the firing line, while the transport side faces away from the firing line, typically faces the vessel.

The pallet frame 8 is provided with fixating devices 9 for securing an accessory 3, e.g. a PLET, to the pallet 1 at the support side thereof.

The pallet frame 8 is provided with coupling devices 10 adapted to couple the pallet with a PLET handler, to allow the PLET handler to pivot the pallet from a horizontal transport position into an upright support position.

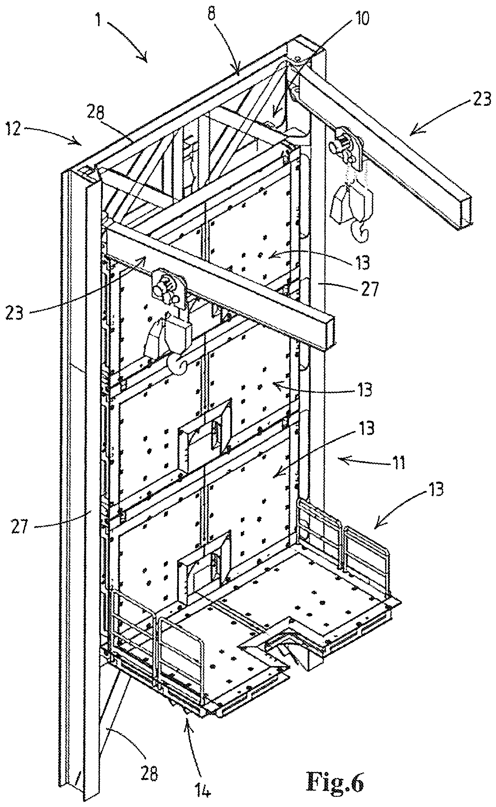

At the transport side 12 the pallet frame 8 of the installation pallet 1 is configured as a skid frame for transporting, i.e. skidding. Thus, the installation frame 8 enables transport of the accessory 3 over the deck of the off-shore vessel 5. Typically, the deck of off shore vessels is provided with skid rails to enable transport of heavy tools and equipment over the deck. In a preferred embodiment, the installation frame is adapted to cooperate with those skid rails. According to the invention, the installation pallet 1 comprises multiple pivotable deck sections 13. The pivotable deck sections 13 are pivotable mounted in the pallet frame 8. Each pivotable deck section 13 can pivot between a folded position, in which the pivotable deck section 13 is located adjacent the pallet frame 8, and an extended position, in which the pivotable deck section 13 at the support side of the pallet frame 1 extends in a direction away from the pallet frame. The installation pallet 1 shown in figs. 2, 4 and 6 is provided with four pivotable deck sections 13. In Fig. 2, the pivotable deck sections 13 are all in the folded position. In Fig. 3 the pivotable deck sections are all in the extended position. In Fig. 6 the lower pivotable deck section is in the extended position and the three other pivotable deck sections are in the folded position.

In the embodiment of an installation pallet according to the invention shown in Fig. 3, the installation pallet 1, in particular the pivotable deck sections 13, are at the end that faces the tubular 15 supported in the firing line 6, provided with an tubular receiving opening 16 for receiving the tubular, e.g. a pipe, tubing or cable, supported in a firing line.

In the preferred embodiment shown, the tubular receiving opening 16 is substantially U-shaped, thus, the deck portions provides access along 180 degrees of the pipe, i.e. at three sides. Furthermore, the deck section 13 are each provided with a door section 17 that can be used to close an entry port of the receiving opening 16, and thus secure tubular 15 within the receiving opening 16, and stabilizing the position of the tubular 15 relative to the deck section 13.

In Fig. 3, the pivotable deck sections 13 are thus in combination used to center the tubular 15 relative to the deck section in particular to the installation pallet, and thus the PLET handler. In a further preferred embodiment, rollers are provided on the deck sections adjacent the receiving opening to guide the tubular relative to the deck sections.

In the preferred embodiment shown, the installation pallet 1 has a pallet frame 8 comprising two longitudinal side beams 27, and multiple cross beams 28 connecting the longitudinal side beams. The side beams 27 extend along the length of the installation pallet, in particular along the pallet frame, and provide a skid surface at the transport side of the pallet frame.

In the preferred embodiment shown, the longitudinal beams 28 furthermore provide a mounting surface at the support side of the pallet, which mounting surface is furthermore provided with mounts for securing equipment.

In the embodiment shown, the longitudinal side beams 27 with one side, in the embodiment shown the support surface at the top side, form the upper most part of the pallet and with an opposite side form the lower most part, in the embodiment shown being the skid surface, of the pallet when the pallet is in its transport position and the pivotable decks sections are in the folded positions.

In the preferred embodiment shown, the pivotable deck sections, when in the folded position, are flush with each other such that together they provide the pallet with a support surface for supporting equipment, which support surface is flush with a top side of the pallet frame, and wherein the hoisting beams, if provided, when in the folded position are located below said support surface when the pallet is in the horizontal position, see for example Fig. 2.

In the preferred embodiment shown, the pivotable deck sections, when in the folded position are located adjacent each other, such that together they form a support deck, for example as shown in Fig. 2

In the preferred embodiment shown, the pivotable deck sections, when in the folded position, are located within the pallet frame, i.e. the pivotable deck sections when in the folded position are at most flush with the top of the pallet frame of the installation pallet, or are recessed in the frame such that they are located below the top of the frame. When the deck sections are flush with the top of the pallet frame, the support deck defined by the folded deck sections is also flush with the top of the pallet frame, such that the pallet frame, or at least the top thereof, is also part of the support deck.

In an alternative embodiment, the pivotable deck sections, when in the folded position, are located at least partially above the pallet frame, such that the top of the pallet frame is located below the support deck defined by the folded pivotable deck sections. In such an embodiment, the accessory, e.g. the PLET, when supported on the support deck, may extend beyond the pallet frame. In contrast, when the pivotable deck sections are recessed in the pallet frame, and the accessory is mounted on the support deck, the accessory may not extend beyond the parts of the pallet frame that is located above the support deck. For example, when the pallet frame comprise two longitudinal beams extending on opposite sides of the pallet, for example as shown in Fig. 2, and the pivotable deck sections, when in the folded position are located within the pallet frame, an accessory mounted on the support deck may collide with the beams when it is wider than the pivotable deck sections.

In an embodiment, the pivotable working deck sections, when in the folded position are located within the pallet frame, and the pallet frame provides a support surface for mounting the accessories. For example, when the pallet frame comprise two longitudinal beams extending on opposite sides of the pallet, for example as shown in Fig. 2, and the pivotable deck sections, when in the folded position are located within the pallet frame, an can be mounted on the top sides surface of those support beams. This is beneficial since it allows for mounting accessories on the installation pallet which are wider than the installation pallet. The pivotable deck sections are pivoted about a pivot axis that extend perpendicular to a longitudinal axis of the installation pallet.

It is noted that in the embodiments shown, the pivotable deck sections are pivoted downward when pivoted into the extended position. Preferably, the pallet frame is provided with stops that interact with the pitvotable deck sections such that they define the outermost positions of the pivotable deck sections, i.e. the folded position and the extended position. Thus, when the deck sections are in the extended position, they cannot pivot in a downward direction.

In an alternative embodiment, the pivotable deck sections are pivoted upward when pivoted into the extended position.

Preferably, the pallet frame and/or the pivotable deck sections, are provided with locking devices for securing the pivotable deck sections in their folded position and extended position, and preferably in intermediate positions as well.

In an embodiment the off shore vessel 5 provided with a PLET handling system comprising the PLET handler 2 and the installation pallet 1 according to the invention, the PLET handler 2 is provided with skid rails which allow the installation pallet to be skidded onto the PLET handler 2 when the PLET handler is in a lowered position, show in in Fig. 10. The rails on he PLET handler preferably are aligned with rails on the deck of a vessel when the PLET handler is in the lowered position, such that the pallet frame can skid from the deck onto the PLET handler and vice versa.

In the preferred embodiments shown, the pivotable deck sections 13 comprise a deck section support frame 14, which deck section support frame is pivotably mounted to the pallet frame 8, and a deck panel 15 mounted to the deck section support frame to provide a deck surface.

In the embodiment shown, the deck panel 15 is a combination of beams and metal sheets, the latter defining the actual deck surface.

Fig. 4 shows a schematic side view of an installation pallet according to the invention, the installation pallet comprising six pivotable deck sections, which are all in the extended position in Fig. 4. In the preferred embodiment shown, the deck section support frame of the pivotable deck section, is provided with mounts and hoisting devices, such that the pivotable deck sections, when in the extended position, can be used as a hoisting beam.

Fig. 4 in combination with Fig. 5 shows that the PLET handler can be used to position the installation pallet in different working position relative to the firing line. In Fig. 4 the installation pallet, in particular the deck sections of the installation pallet, are provided adjacent the firing line, while in Fig. 5 the deck sections are located at some distance away from the firing line. The position of the installation pallet can be adapted to fit the requirement of a particular job, and/or for example to make space for lowering a wide section of pipeline, for example a pipe line just provided with an accessory, without the requiring the deck sections to be pivoted into their folded position.

In the particular embodiment shown, the vessel 5 comprises a PLET handling system comprising the PLET handler 2 and the installation pallet 1. In the particular embodiment shown, the vessel is furthermore provided with a J-lay tower 4 comprises an A-frame, see for example Fig. 2 and Fig. 10, which show the bottom end of the J-lay tower. The PLET handler 2 is configured to introduce a PLET into the firing line through an access opening 18 defined by the A-frame of the J-lay tower.

In the particular embodiment shown, the PLET handler 2 comprises a tiltable lift arm 19, and a support bed 20, which support bed is adapted to couple with the installation pallet 1, and which support bed is pivotably supported by the lift arm at one end and is connected to the lift arm via hydraulic cylinders 21 at an opposite end, which hydraulic cylinders enable pivoting of the bed relative to the lift arm to align the bed, and thus the installation pallet coupled with the bed, relative to the firing line.

In addition to, or instead of, using the PLET handler to position the installation pallet relative to the firing line, the PLET alignment device, if present, can be used to position the installation pallet relative to the firing line. It should be noted that the range of movement that is available with a PLET alignment device is in general less than the range of movement that can be obtained by a PLET handler as shown in Fig. 4 and Fig. 5.

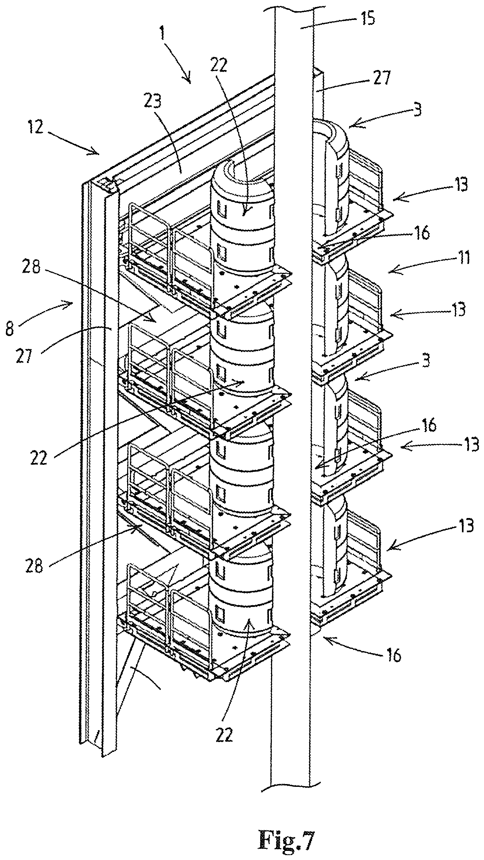

Fig. 7 shows a perspective view of the installation pallet of fig. 2 in a support position with one pivotable working deck and two hoisting beams in an extended position, furthermore, in the embodiment shown, the installation pallet has been used to introduce buoyancy cans 22 adjacent the firing line. The buoyancy cans have been be mounted to the different deck sections 13 of the installation pallet 1 such that a vertical row of items is provided by the installation pallet in its upright position adjacent the firing line. Thus, for example, the items 22 can be attached to the tubular 15 one by one starting with the lowest item. Once an items has been attached to the tubular, the empty deck section can be folded from its extended position into its folded position in the installation pallet so that the tubular with the item attached to it can be lowered without the item colliding with the deck section. Once a predetermined section of tubular has been lowered, the next item is attached to the tubular, the deck section is pivoted into its folded position, etc.

It is noted that appurtenances to be mounted on the pipeline such as buoyancy cans and VIV strakes can be large and heavy and difficult to transport to and install on the pipeline. Such items can be lashed onto these deck sections when the pallet is on deck outside of the work area. The installation pallet with the appurtenances is than skidded towards the PLET handler and is positioned adjacent the firing line using the PLET handler. Once the installation pallet is in place, the items can be attached to a pipe line supported in the firing line.

Fig. 6 shows a perspective view of the installation pallet of fig. 2 in a support position with one pivotable working deck and two hoisting beams in an extended position furthermore, the embodiment of the installation pallet 1 shown comprises two hoist beams 23. The hoist beams 23 are pivotably mounted to the pallet frame 8 such that they can be pivoted between a folded position, in which the hoist beam is located adjacent the pallet frame, in the embodiment shown within the pallet frame (see for example Fig. 3), and an extended position, in which extended position the hoist beam at the support side of the pallet frame extends in a direction away from the pallet frame, to enable hoisting of equipment when the pallet is held in the support position.

In an embodiment, two hoisting davits are installed at one end of the installation pallet, preferably the end being the top end when the installation pallet is in its upright support position. The davits for example consist of an I-shaped beam that can hinge to position it in the horizontal plane (assuming that the pallet is in supported in its upright position). The beams are stored flat on the pallet when not in use. The beam is equipped with a trolley hoist that travels along the beam.

In a preferred embodiment, the hoist beam has a length such that when in its unfolded position it extends, in a direction away from the pallet frame, beyond the pivotable deck sections in their extended position, to thus enable to lift and lower objects along the pivotable deck sections, in particular along the side of the deck sections facing the firing line when the installation pallet is supported adjacent the firing line.

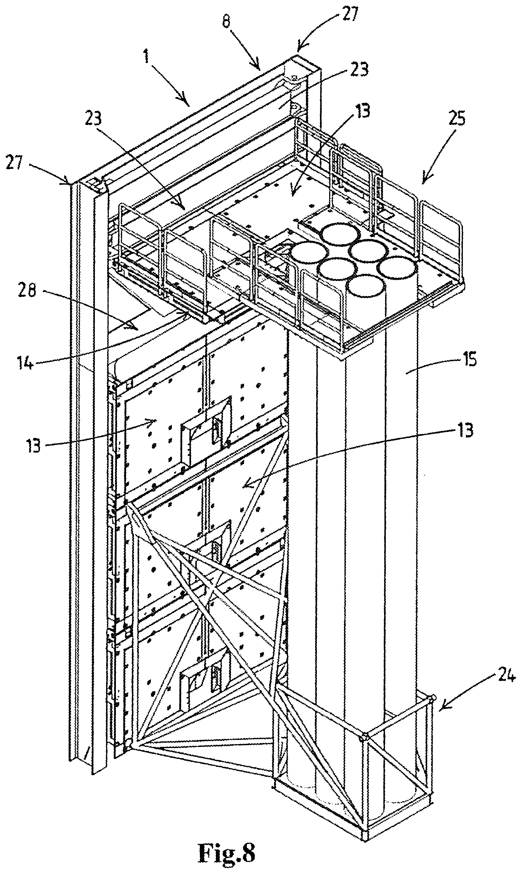

Fig. 8 shows a perspective view of the installation pallet of fig. 2 in a support position with one pivotable working deck in an extended position, configured for supporting pipe sections.

In the particular embodiment shown, the installation pallet 1 is used to mount equipment in the form of an installations. For example, during straightening trials or pipe diameter changes in the pipeline significant lengths of pipe have to be scrapped and removed from the firing line. The cut pipe sections are conventionally removed one by one using a crane. This operation can be performed more time efficient by equipping the installation pallet 1 as a scrap pipe collecting container by providing a tubular support platform 24 at the bottom end of the installation pallet and a tubular retainer platform 25 at the top end of the installation pallet.

Fig. 9 schematically shows a side view and top view of an alternative installation pallet configured for supporting pipe sections;

The installation pallet according to the invention is dimensioned such that it can support a PLET, more in particular can act as an intermediate between the PLET and PLET handling systems. The installation pallet is preferably dimensioned such that it allows for two shipping containers to be mounted thereon, preferably two shipping containers.

Fig. 10 shows a perspective view of an installation pallet according to the invention with two shipping containers secured thereto, which installation pallet is supported in its transport position by a PLET handler; and Fig. 11 schematically shows a side view of the installation pallet of fig. 10.

In the embodiment shown in fig 10 and Fig. 11 the installation pallet 1 is equipped with standard container twist locks to support two standard 20ft or 30ft shipping containers 26. The containers can for example be provided with consumables and/or be configured as a work station. The containers can be lowered on and mounted to the installation pallet away from the work area and be transported to the firing line using the PLET handling system.

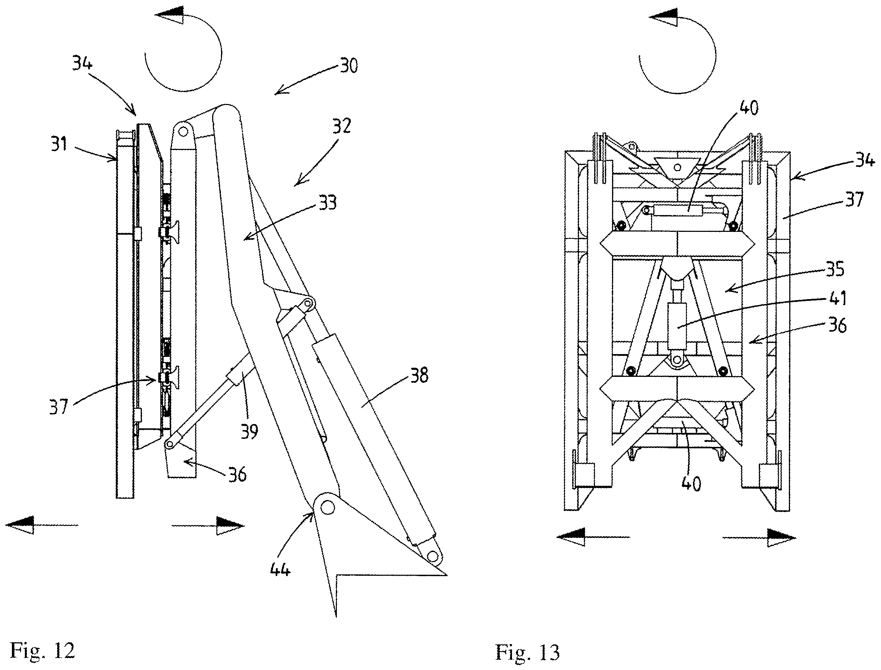

Fig. 12 shows a side view of an alternative embodiment of a PLET handing system 30 according to the invention, the PLET handling system comprising an installation pallet 31 and a PLET handler 32. The PLET handling system is also depicted in Figs. 13-18, be it that in Figs. 13-15 only the support bed 34 is depicted, and not the installation pallet 31 and the tiltable lift arm 33.

In the embodiment shown, the PLET handling system according to the invention comprises a tiltable lift arm 33 and a support bed 34, and the support bed comprises an alignment system 35. In the particular embodiment shown, the support bed 34 comprise a base frame 36, which base frame is pivotably supported by the tiltable lift arm 33, and a top frame 37 adapted to couple with the installation pallet 31. Between the base frame 36 and the top frame 37 is provided the alignment system 35.

Figures 12 to 15 show how the PLET handler is able to positon a installation pallet, and thus anything mounted on the installation pallet, relative to the firing line. It is submitted that in all figures, the tiltable lift arm is in a raised position, in which the installation pallet is supported in an upright position adjacent the firing line.

The support bed can be positioned relative to the firing line by pivoting of the tiltable support arm. The tiltable support arm is pivoted by two main actuators, in the embodiment shown two parallel hydraulic cylinders. It is noted that the PLET handler 32 shown in Figs. 12-18 differs from the PLET handler shown in Fig. 11 in that the actuator is mounted with one and to the deck and not to the pipe-lay tower. Both PET handlers tilt about a tilt axis that coincides with a tilt axis of the pipe-lay tower.

With the PLET handler shown in Figs. 12-18, two actuators, in the embodiment shown hydraulic cylinders 39, are provided between the tiltable liftarm and the support bed, for positioning the bed, which is pivotably supported by the tiltable Ifit arm, relative to the lift arm. Thus, the titlable lift arm can be used for positioning the bed relative to the firing line, i.e. closer to and farther away from the firing line. The cylinders between the titlable lift arm and the support bed can be used to adjust the angle, or tilt, of the bed. Thus, for example, the support bed can be supported parallel to a tilted firing line.

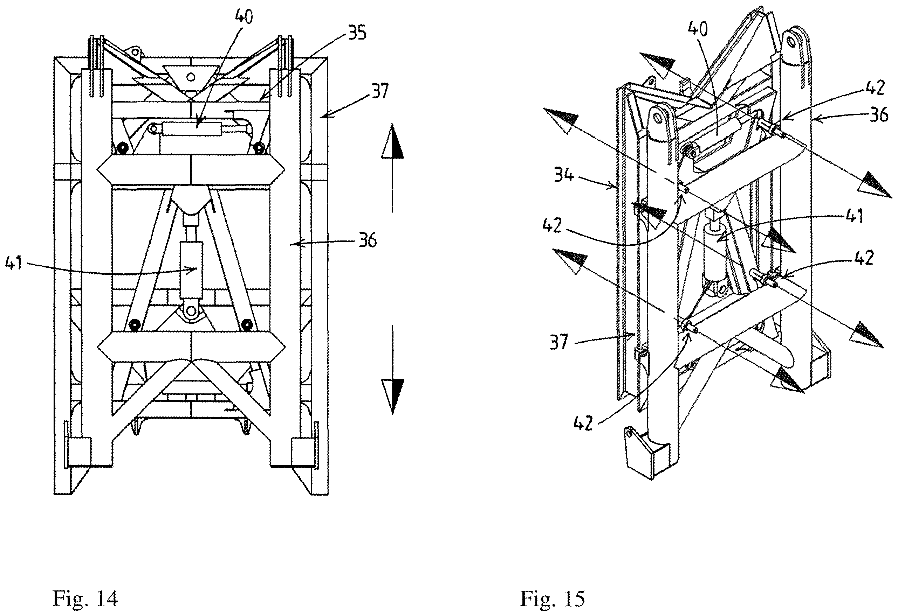

To enable further adjustment relative to the firing line, the support bed is provided with an alignment system. The top frame of the support bed is moveably connected to the base frame. The top frame can be moved to the left and right using left-right actuators in the form of hydraulic cylinders 40, which possible movement is depicted with arrows in Fig. 13. In the embodiment shown, the actuators 40 can also be used for rotating the top frame relative to the base frame, which possible movement is also indicated with an arrow in Fig. 13. The top frame can be moved to the up and down using up-down actuators in the form of hydraulic cylinders 41, which possible movement is depicted with arrows in Fig. 14. Furthermore, the top frame can be moved towards and away from the base frame using towards-away actuators in the form of screw jacks 42, which possible movement is depicted with arrows in Fig. 15. These towards-away actuators improve on the accuracy of positioning of the support bed by the tiltable lift arm.

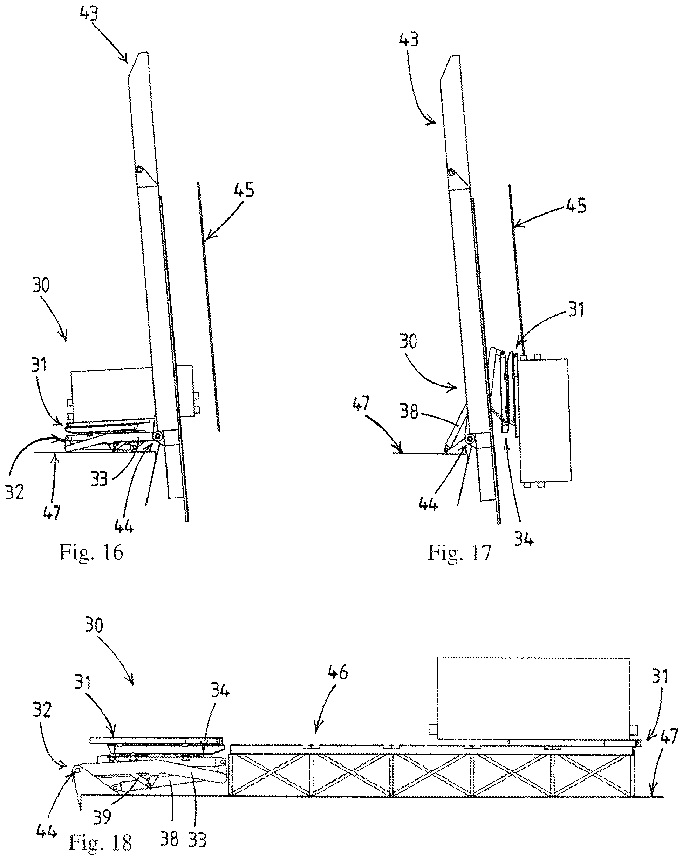

Fig. 16 shows the PLET handler system of Fig. 12 adjacent a pipe-lay tower 43. In the embodiment shown the pipe-lay tower is a pivotable tower, which is pivotable about a pivot axis that coincides with the pivot axis of the PLET handler. The firing line, or at least a section thereof, of the pipe lay tower is indicated with line 45. In the embodiment shown, the pipe-lay tower is slightly tilted, such that the firing line is at an angle with the vertical.

Fig. 16 shows the PLET handler system 30 in a first position, in which a PLET mounted on the pallet projects through an opening in the tower. Fig. 17 shows the PLET handler in a second position, in which it supports the installation pallet in an upright support position, in this position, the actuators provided between the tiltable lift arm and the support bed can be used to enable the PLET handler to support the installation pallet parallel to the tilted firing line.

It is noted that in the preferred embodiment shown, the PLET handler is configured to not only support the installation pallet in its horizontal transport position and its upright support position, in the first positon, shown in Fig. 16, the PLET handler is pivoted such that the end of the installation pallet further away from the pipe-lay tower is lowered, to thus support the pallet with its support surface substantially perpendicular to the tilted firing line. This may be beneficial when the pallet is to be used to position equipment adjacent the firing line without being tilted into the upright support position.

Fig. 18 shows the PLET handler system of Fig. 12 in in combination with a raised deck and a second installation pallet. A first installation pallet is shown on the PLET handler. The first installation pallet is not provided with equipment, and should be removed from the PLET handler to allow the second installation pallet to be moved onto the PLET handler.

In the embodiment shown, the PLET handler, more in particular the top frame of the support bed of the PLET handler, is provided with skid rails and a raised deck 46 is provided with skid rails. The rails of the PLET handler are aligned with rails on the deck of when the PLET handler is in the lowered position, shown in Fig. 18, such that the pallet frame can skid from the deck onto the PLET handler and vice versa. It is noted that in the embodiment shown, the pivotable pipe-lay tower is mounted on the deck and the PLET handler is provided with a pivot axis that coincides with the pivot axis of the pipe-lay tower. thus, the top of the support bed of the PLET handler is located above the main deck 47 of the vessel and a raised deck is provided to enable the pallet to be skidded onto an off the PLET handler.

In an alternative embodiment, for example the pivot axis of the pipe-lay tower may be located below the main deck, or the PLET handler may be recessed in the main deck, such that the top of the support bed is level with the main deck of the vessel. In yet another embodiment, a lift may be used to bring the installation pallet level with the top of the PLET handler, or the PLET pallet may be craned onto the PLET handler. Further alternative embodiments are also possible.

### reference signs

- 01: installation pallet
- 02: PLET handler
- 03: accessory
- 04: J-lay tower
- 05: vessel
- 06: firing line
- 07: shipping containers
- 08: pallet frame
- 09: fixating devices
- 10: coupling devices
- 11: support side
- 12: transport side
- 13: pivotable deck sections
- 14: deck section support frame
- 15: tubular
- 16: tubular receiving opening
- 17: door section
- 18: access opening A-frame
- 19: lift arm PLET
- 20: support bed PLET
- 21: hydraulic cylinders lift bed
- 22: buoyancy cans
- 23: hoist beams
- 24: tubular support platform
- 25: tubular retainer platform
- 26: shipping containers
- 27: longitudinal side beams
- 28: cross beams
- 30: PLET handling system
- 31: installation pallet
- 32: PLET handler
- 33: tiltable lift arm
- 34: support bed
- 35: alignment system
- 36: base frame
- 37: top frame
- 38: hydraulic cylinders tiltable lift arm
- 39: cylinders between tiltable lift arm and support bed
- 40: left-right actuators
- 41: up-down actuator
- 42: towards-away actuator
- 43: pipe-lay tower
- 44: tilt axis PLET handler
- 45: firing line pipe-lay tower
- 46: raised deck
- 47: main deck

## Claims

1. Accessory installation pallet (1) for handling accessory on an off-shore vessel, the installation pallet (1) comprising:
- a pallet frame (8), which pallet frame (8) provides the pallet (1) with structural rigidity and which pallet frame (8) is provided with fixating devices (9) for securing an accessory (3), e.g. a pipeline end termination (PLET), to the pallet (1), wherein the pallet frame (8) is furthermore provided with one or more coupling devices (10) adapted to couple the pallet (1) with a PLET handler (2), to allow the PLET handler (2) to pivot the pallet (1) from a horizontal transport position into an upright support position, and
which pallet frame (8) has a support side (11), which support side (11) faces the accessory (3) when the accessory is mounted on the pallet (1), and a transport side (12), which transport side (12) faces away from the support side (11), and at which transport side (12) the pallet frame (8) is configured as a skid frame for transporting, i.e. skidding, to enable transport of the accessory (3) over the deck of the off-shore vessel; and
- multiple pivotable deck sections (13), which pivotable deck sections (13) are pivotably mounted in the pallet frame (8), such that each deck sections (13) can pivot between a folded position, in which the deck section (13) is located adjacent the pallet frame (8), preferably within the pallet frame (8), and an extended position, in which the deck section (13) at the support side of the pallet frame (8) extends in a direction away from the pallet frame (8).

2. Accessory installation pallet according to claim 1, wherein one or more of the pivotable deck sections comprise a deck section support frame, which deck section support frame is pivotably mounted to the pallet frame, and one or more deck panels, e.g. a combination of beams and grating or metal sheets providing a surface, mounted to the deck section support frame to provide a deck surface.

3. Accessory installation pallet according to claim 1 or 2, wherein one or more of the pivotable deck sections, preferably the deck section support frame of the pivotable deck section, are provided with mounts and/or hoisting devices, such that they can function as a hoisting beam when in the extended position.

4. Accessory installation pallet according to one or more of the preceding claims, wherein:
one or more of the pivotable deck sections can be locked in intermediate positons, i.e. in one or more positions between the folded position and the extended position, to provide a horizontal working deck when the pallet is supported in an inclined position;
and/or
one or more of the pivotable decks sections are at one end provided with an opening for receiving a tubular supported in a firing line;
and/or
one or more of the pivotable decks sections are provided with fixating devices, e.g. mounting openings, for securing equipment to the deck sections, preferably such that the deck sections can be pivoted between the folded position and the extended position while supporting the equipment.

5. Accessory installation pallet according to one or more of the preceding claims, wherein the pivotable deck sections, when in the folded position, are flush with each other such that together they provide the pallet with a support surface for supporting equipment, which support surface preferably is flush with a top side of the pallet frame, and wherein hoisting beams, if provided, when in the folded position are located below said support surface when the pallet is in the horizontal position.

6. Accessory installation pallet according to one or more of the preceding claims, wherein one or more of the pivotable decks sections are provided with mounts, e.g. mounting openings, for mounting railing to the deck sections when in the extended position.

7. Accessory installation pallet according to one or more of the preceding claims, wherein the pallet frame comprise two longitudinal side beams, and multiple cross beams connecting the longitudinal side beams, the side beams extending along the length of the pallet frame, which side beams preferably provide a skid surface at the transport side of the pallet frame, and preferably provide a mount on the opposite side.

8. Accessory installation pallet according to one or more of the preceding claims, wherein the longitudinal side beams with one side form the upper most part of the pallet and with an opposite side form the lower most part of the pallet when the pallet is in its transport position and the pivotable decks sections are in the folded position.

9. Accessory installation pallet according to one or more of the preceding claims, wherein the pallet frame comprises one or more hoist beams, which hoist beams are pivotably mounted to the pallet frame such that they can be pivoted between a folded position, in which the hoist beam is located adjacent the pallet frame, preferably within the pallet frame, and an extended position, in which extended position the hoist beam at the support side of the pallet frame extends in a direction away from the pallet frame, to enable hoisting of equipment when the pallet is held in the support position.

10. Accessory installation pallet according to one or more of the preceding claims, wherein the pallet, in particular one or more of the pivotable deck sections, comprise a passage opening, preferably in combination with a door or panel that can be mounted in the opening for closing the passage opening, that allows for a person to pass through the pallet from the transport side to the support side, to provide a person access to a deck section when the pallet is held in the support position.

11. Accessory installation pallet according to one or more of the preceding claims, wherein the pallet comprises one or more pivotable deck sections, which pivotable deck sections are privotably mounted in the pallet frame, such that each deck sections can pivot between a folded position, in which the deck section is located adjacent the pallet frame, preferably within the pallet frame, and an extended position, in which the deck section at the transport side of the pallet frame extends in a direction away from the pallet frame.

12. Accessory installation pallet according to one or more of the preceding claims, wherein the pallet comprises hydraulic actuators for pivoting the pivotable deck sections between the folded position and the extended position relative to the pallet frame, which actuators preferably comprises connectors, preferably quick connect connectors, for connecting the actuators to connectors, preferably quick connect connectors, preferably located in the PLET handler, of a hydraulic power source.

13. PLET handling system (30) comprising a PLET handler (2) and an accessory installation pallet (1) according to one or more of the preceding claims, which installation pallet (1) is adapted to couple with the PLET handler (2) such that the PLET handler (2) can pivot the installation pallet (1) between its transport position and its support position, and wherein
the PLET handler (2) preferably is provided with skid rails which allow the installation pallet to be skidded onto the PLET handler (2) when the PLET handler (2) is in a lowered position, which rails preferably are aligned with rails on the deck of a vessel when the PLET handler (2) is in the lowered position such that the pallet frame (8) can skid from the deck onto the PLET handler (2) and vice versa;
and/or
the PLET handler (2) preferably comprises a tiltable lift arm (33), and a support bed (20), which support bed (20) is adapted to couple with the installation pallet (1), and which support bed (20) is pivotably supported by the lift arm (33) at one end and is connected to the lift arm (33) via hydraulic cylinders (21) at an opposite end, which hydraulic cylinders (21) enable pivoting of the bed (20) relative to the lift arm (33) to align the bed (20), and thus the installation pallet (1) coupled with the bed (20), relative to the firing line (6).

14. Vessel (5) comprising a PLET handling system according to claim 13, the vessel (5) further comprising a pipe-lay tower (4), e.g. a J-lay tower, preferably a pivotable pipe-lay tower, and a PLET handler (2) for bringing a PLET into the firing line (6), wherein the pipe-lay tower (4) preferably comprises an A-frame, and the PLET handler (2) is configured to introduce a PLET into the firing line (6) through an access opening defined by the A-frame of the pipe-lay tower (4).

15. Method for providing a working platform adjacent a firing line (6), the method comprising the steps:
providing an accessory installation pallet (1) according to one or more of the claims 1-12;
pivoting the installation pallet (1) from a transport position, in which the installation pallet (1) has a substantially horizontal orientation, into an support position, in which the installation pallet (1) has a substantially vertical orientation;
supporting the accessory installation pallet (1) in the support position adjacent the firing line (6);
pivoting at least one of the one or more pivotable deck sections (13) into the extended position, such that the at least one pivotable deck section (13) provides a working platform adjacent the firing line (6).

## Patentansprüche

1. Zubehörteilinstallationspalette (1) zum Handhaben eines Zubehörteils auf einem Offshore-Fahrzeug, wobei die Installationspalette (1) umfasst:
- einen Palettenrahmen (8), wobei der Palettenrahmen (8) der Palette (1) strukturelle Festigkeit bereitstellt und wobei der Palettenrahmen (8) mit Befestigungsvorrichtungen (9) zum Sichern eines Zubehörteils (3), zum Beispiel eines Pipeline-Endabschlusses (PLET), an der Palette (1) versehen ist, wobei
der Palettenrahmen (8) weiterhin mit einer oder mehreren Koppelvorrichtungen (10) versehen ist, welche ausgestaltet sind, die Palette (1) mit einem PLET-Antrieb (2) zu koppeln, um dem PLET-Antrieb (2) zu ermöglichen, die Palette (1) aus einer horizontalen Transportposition in eine aufrechte Haltepositionen zu drehen, und
wobei der Palettenrahmen (8) eine Halteseite (11), wobei die Halteseite (11) dem Zubehörteil (3) gegenüberliegt, wenn das Zubehörteil an der Palette (1) angebracht ist, und eine Transportseite (12), wobei die Transportseite (12) von der Halteseite (11) weg weist, aufweist, und wobei an der Transportseite (12) der Palettenrahmen (8) als ein Gleitrahmen zum Transportieren, das heißt Gleiten, ausgestaltet ist, um einen Transport des Zubehörteils (3) über das Deck des Offshore-Fahrzeugs zu ermöglichen; und
- mehrere drehbare Deckabschnitte (13), wobei die drehbaren Deckabschnitte (13) drehbar in dem Palettenrahmen (8) angebracht sind, sodass sich jeder Deckabschnitt (13) zwischen einer gefalteten Position, in welcher der Deckabschnitt (13) benachbart zu dem Palettenrahmen (8) angeordnet ist, vorzugsweise innerhalb des Palettenrahmens (8), und einer ausgefahrenen Position, in welcher sich der Deckabschnitt (13) an der Halteseite des Palettenrahmens (8) in einer Richtung weg von dem Palettenrahmen (8) erstreckt, drehen kann.

2. Zubehörteilinstallationspalette nach Anspruch 1, wobei einer oder mehrere der drehbaren Deckabschnitte einen Deckabschnitthalterahmen, wobei der Deckabschnitthalterahmen drehbar an dem Palettenrahmen angebracht ist, und eine oder mehrere Deckplatten, zum Beispiel eine Kombination aus Balken und einem Gitter oder Metalblechen, welche eine Fläche bereitstellen, welche an dem Deckabschnitthalterahmen angebracht sind, um eine Deckfläche bereitzustellen, umfassen.

3. Zubehörteilinstallationspalette nach Anspruch 1 oder 2, wobei einer oder mehrere der drehbaren Deckabschnitte, vorzugsweise der Deckabschnitthalterahmen des drehbaren Deckabschnitts, mit Befestigungen und/oder Hebevorrichtungen versehen sind, sodass sie als ein Hebebalken arbeiten können, wenn sie in der ausgefahrenen Position sind.

4. Zubehörteilinstallationspalette nach einem oder mehreren der vorhergehenden Ansprüche, wobei:
einer oder mehrere der drehbaren Deckabschnitte in Zwischenpositionen verriegelt werden können, das heißt in einer oder mehreren Positionen zwischen der gefalteten Position und der ausgefahrenen Position, um ein horizontales Arbeitsdeck bereitzustellen, wenn die Palette in einer geneigten Position gehalten wird;
und/oder
einer oder mehrere der drehbaren Deckabschnitte an einem Ende mit einer Öffnung zum Aufnehmen eines in einer Schusslinie gehaltenen Rohrs versehen sind;
und/oder
einer oder mehrere der drehbaren Deckabschnitte mit Befestigungsvorrichtungen, zum Beispiel Befestigungsöffnungen, zum Sichern einer Ausrüstung an den Deckabschnitten versehen sind, vorzugsweise derart, dass die Deckabschnitte zwischen der gefalteten Position und der ausgefahrenen Position gedreht werden können, während sie die Ausrüstung halten.

5. Zubehörteilinstallationspalette nach einem oder mehreren der vorhergehenden Ansprüche, wobei die drehbaren Deckabschnitte in der gefalteten Position bündig zueinander sind, sodass sie zusammen die Palette mit einer Haltefläche zum Halten einer Ausrüstung bereitstellen, wobei die Haltefläche vorzugsweise bündig zu einer Oberseite des Palettenrahmens ist und wobei Hebebalken, falls vorhanden, in der gefalteten Position unterhalb der Haltefläche angeordnet sind, wenn die Palette in der horizontalen Position ist.

6. Zubehörteilinstallationspalette nach einem oder mehreren der vorhergehenden Ansprüche, wobei einer oder mehrere der drehbaren Deckabschnitte mit Befestigungen, zum Beispiel Befestigungsöffnungen, zum Befestigen eines Geländers an den Deckabschnitten in der ausgedehnten Position vorgesehen sind.

7. Zubehörteilinstallationspalette nach einem oder mehreren der vorhergehenden Ansprüche, wobei der Palettenrahmen zwei Längseitenbalken und mehrere Querbalken, welche die Längseitenbalken verbinden, umfasst, wobei sich die Seitenbalken entlang der Länge des Palettenrahmens erstrecken, wobei die Seitenbalken vorzugsweise eine Gleitfläche an der Transportseite des Palettenrahmens bereitstellen und vorzugsweise eine Befestigung an der gegenüberliegenden Seite bereitstellen.

8. Zubehörteilinstallationspalette nach einem oder mehreren der vorhergehenden Ansprüche, wobei die Längseitenbalken mit einer Seite den obersten Teil der Palette ausbilden und mit einer gegenüberliegenden Seite den untersten Teil der Palette ausbilden, wenn die Palette in ihrer Transportposition ist und die drehbaren Deckabschnitte in der gefalteten Position sind.

9. Zubehörteilinstallationspalette nach einem oder mehreren der vorhergehenden Ansprüche, wobei der Palettenrahmen einen oder mehrere Hebebalken umfasst, wobei die Hebebalken drehbar an dem Palettenrahmen derart angebracht sind, dass sie zwischen einer gefalteten Position, in welcher der Hebebalken benachbart zu dem Palettenrahmen angeordnet ist, vorzugsweise innerhalb des Palettenrahmens, und einer ausgefahrenen Position drehbar angebracht sind, wobei sich der Hebebalken in der ausgefahrenen Position an der Halteseite des Palettenrahmens in einer Richtung weg von dem Palettenrahmen erstreckt, um ein Heben einer Ausrüstung zu ermöglichen, wenn die Palette in der Haltepositionen gehalten wird.

10. Zubehörteilinstallationspalette nach einem oder mehreren der vorhergehenden Ansprüche, wobei die Palette, insbesondere einer oder mehrere der drehbaren Deckabschnitte, eine Durchgangsöffnung, vorzugsweise in Kombination mit einer Tür oder Platte, welche in der Öffnung zum Schließen der Durchgangsöffnung angebracht werden kann, umfasst, welche einer Person ermöglicht, durch die Palette von der Transportseite zu der Halteseite zu gehen, um einen Personenzugriff auf einen Deckabschnitt bereitzustellen, wenn die Palette in der Haltepositionen gehalten wird.

11. Zubehörteilinstallationspalette nach einem oder mehreren der vorhergehenden Ansprüche, wobei die Palette einen oder mehrere drehbare Deckabschnitte umfasst, wobei die drehbaren Deckabschnitte in dem Palettenrahmen drehbar angebracht sind, sodass sich jeder Deckabschnitt zwischen einer gefalteten Position, in welcher der Deckabschnitt benachbart zu dem Palettenrahmen, vorzugsweise innerhalb des Palettenrahmens, angeordnet ist, und einer ausgefahrenen Position, in welcher sich der Deckabschnitt an der Transportseite des Palettenrahmens in einer Richtung weg von dem Palettenrahmen erstreckt, drehen kann.

12. Zubehörteilinstallationspalette nach einem oder mehreren der vorhergehenden Ansprüche, wobei die Palette hydraulische Aktuatoren zum Drehen der drehbaren Deckabschnitte zwischen der gefalteten Position und der ausgefahrenen Position relativ zu dem Palettenrahmen umfasst, wobei die Aktuatoren vorzugsweise Verbinder umfassen, vorzugsweise Schnellverbindungsverbinder, zum Verbinden des Aktuators mit Verbindern einer hydraulischen Antriebsquelle, vorzugsweise Schnellverbindungsverbindern, welche vorzugsweise in dem PLET-Antrieb angeordnet sind.

13. PLET-Antriebssystem (30) umfassend einen PLET-Antrieb (2) und eine Zubehörteilinstallationspalette (1)
nach einem oder mehreren der vorhergehenden Ansprüche, wobei die Installationspalette (1) ausgestaltet ist, mit dem PLET-Antrieb (2) derart gekoppelt zu werden, dass der PLET-Antrieb (2) die Installationspalette (1) zwischen ihrer Transportposition und ihrer Haltepositionen drehen kann, und wobei
der PLET-Antrieb (2) vorzugsweise mit Gleitschienen versehen ist, welche der Installationspalette ermöglichen, auf dem PLET-Antrieb (2) zu gleiten, wenn der PLET-Antrieb (2) in einer abgesenkten Position ist, wobei die Schienen vorzugsweise zu Schienen auf dem Deck eines Fahrzeugs ausgerichtet sind, wenn der PLET-Antrieb (2) in der abgesenkten Position ist, sodass der Palettenrahmen (8) von dem Deck auf den PLET-Antrieb (2) und umgekehrt gleiten kann;
und/oder
der PLET-Antrieb (2) vorzugsweise einen neigbaren Hebearm (33) und ein Haltebett (20) umfasst, wobei das Haltebett (20) ausgestaltet ist, mit der Installationspalette (1) gekoppelt zu werden, und wobei das Haltebett (20) drehbar mittels des Hebearm (33) an einem Ende gehalten wird und mit dem Hebearm (33) über Hydraulikzylinder (21) an einem gegenüberliegenden Ende verbunden ist, wobei die Hydraulikzylinder (21) ein Drehen des Bettes (20) relativ zu dem Hebearm (33) ermöglichen, um das Bett (20) und somit die Installationspalette (1), welche mit dem Bett (20) gekoppelt ist, relativ zu der Schusslinie (6) auszurichten.

14. Fahrzeug (5) umfassend ein PLET-Antriebssystem nach Anspruch 13, wobei das Fahrzeug (5) ferner einen Rohrlegeturm (4), zum Beispiel einen J-Legeturm, vorzugsweise einen drehbaren Rohrlegeturm, und einen PLET-Antrieb (2) zum Bringen eines PLET in die Schusslinie (6) umfasst, wobei der Rohrlegeturm (4) vorzugsweise einen A-Rahmen umfasst und der PLET-Antrieb (2) ausgestaltet ist, einen PLET in die Schusslinie (6) durch eine Zugriffsöffnung, welche von dem A-Rahmen des Rohrlegeturms (4) definiert wird, einzubringen.

15. Verfahren zum Bereitstellen einer Arbeitsplattform benachbart zu einer Schusslinie (6), wobei das Verfahren die Schritte umfasst:
Bereitstellen einer Zubehörteilinstallationspalette (1) nach einem oder mehreren der Ansprüche 1 bis 12;
Drehen der Installationspalette (1) von einer Transportposition, in welcher die Installationspalette (1) eine im Wesentlichen horizontale Ausrichtung aufweist, in eine Halteposition, in welcher die Installationspalette (1) eine im Wesentlichen vertikale Ausrichtung aufweist;
Halten der Zubehörteilinstallationspalette (1) in der Halteposition benachbart zu der Schusslinie (6);
Drehen von mindestens einem des einen oder der mehreren drehbaren Deckabschnitte (13) in die ausgefahrenen Position, sodass der mindestens eine drehbare Deckabschnitt (13) eine Arbeitsplattform benachbart zu der Schusslinie (6) bereitstellt.

## Revendications

1. Palette d'installation d'accessoire (1) pour manipuler un accessoire sur un navire de type off-shore, la palette d'installation (1) comprenant :
un bâti de palette (8), lequel bâti de palette (8) dote la palette (1) d'une rigidité structurelle et lequel bâti de palette (8) est doté de dispositifs de fixation (9) pour fixer un accessoire (3), par exemple une terminaison d'extrémité de pipeline (PLET), sur la palette (1), dans laquelle :
le bâti de palette (8) est en outre doté d'un ou de plusieurs dispositifs de couplage (10) adaptés pour coupler la palette (1) avec un manipulateur de PLET (2), pour permettre au manipulateur de PLET (2) de faire pivoter la palette (1) d'une position de transport horizontale dans une position de support verticale, et
lequel bâti de palette (8) a un côté de support (11), ledit côté de support (11) fait face à l'accessoire (3) lorsque l'accessoire est monté sur la palette (1) et un côté de transport (12), lequel côté de transport (12) est orienté à l'opposé du côté de support (11), et auquel côté de transport (12), le bâti de palette (8) est configuré comme un bâti de patin pour le transport, c'est-à-dire glisser, afin de permettre le transport de l'accessoire (3) sur le pont du navire de type off-shore ; et
plusieurs sections de pont pivotantes (13), lesquelles sections de pont pivotantes (13) sont montées de manière pivotante dans le bâti de palette (8), de sorte que chacune des sections de pont (13) peut pivoter entre une position pliée, dans laquelle la section de pont (13) est positionnée de manière adjacente au bâti de palette (8), de préférence dans le bâti de palette (8), et une position étendue, dans laquelle la section de pont (13) du côté du support du bâti de palette (8) s'étend dans une direction à distance du bâti de palette (8).

2. Palette d'installation d'accessoire selon la revendication 1, dans laquelle une ou plusieurs sections de pont pivotantes comprennent un bâti de support de section de pont, ledit bâti de support de section de pont est monté de manière pivotante sur le bâti de palette, et un ou plusieurs panneaux de pont, par exemple une combinaison de poutres et de grille ou de feuilles métalliques fournissant une surface, montée sur le bâti de support de section de pont pour fournir une surface de pont.

3. Palette d'installation d'accessoire selon la revendication 1 ou 2, dans laquelle une ou plusieurs des sections de pont pivotantes, de préférence le bâti de support de section de pont de la section de pont pivotante, sont prévues avec des supports et/ou des dispositifs de levage, de sorte qu'elles peuvent fonctionner comme une poutre de levage lorsqu'elles sont dans la position étendue.

4. Palette d'installation d'accessoire selon une ou plusieurs des revendications précédentes, dans laquelle :
une ou plusieurs des sections de pont pivotantes peuvent être verrouillées dans des positions intermédiaires, c'est-à-dire dans une ou plusieurs positions entre la position pliée et la position étendue, pour fournir un pont de travail horizontal lorsque la palette est supportée dans une position inclinée ;
et/ou
une ou plusieurs des sections de pont pivotantes sont prévues, au niveau d'une extrémité, avec une ouverture pour recevoir un élément tubulaire supporté dans un câble de tir ;
et/ou
une ou plusieurs des sections de pont pivotantes sont prévues avec des dispositifs de fixation, par exemple des ouvertures de montage, pour fixer l'équipement aux sections de pont, de préférence de sorte que les sections de pont peuvent être pivotées entre la position pliée et la position étendue tout en supportant l'équipement.

5. Palette d'installation d'accessoire selon une ou plusieurs des revendications précédentes, dans laquelle les sections de pont pivotantes, lorsqu'elles sont dans la position pliée, sont de niveau entre elles de sorte qu'ensemble elles dotent la palette d'une surface de support pour supporter l'équipement, laquelle surface de support est de préférence de niveau avec un côté supérieur du bâti de palette, et dans lequel les poutres de levage, si elles sont prévues, lorsqu'elles sont dans la position pliée, sont positionnées au-dessous de ladite surface de support lorsque la palette est dans la position horizontale.

6. Palette d'installation d'accessoire selon une ou plusieurs des revendications précédentes, dans laquelle une ou plusieurs des sections de pont pivotantes sont prévues avec des supports, par exemple des ouvertures de montage, pour monter le rail sur les sections de pont lorsqu'elles sont dans la position étendue.

7. Palette d'installation d'accessoire selon une ou plusieurs des revendications précédentes, dans laquelle le bâti de palette comprend deux poutres latérales longitudinales, et plusieurs poutres transversales raccordant les poutres latérales longitudinales, les poutres latérales s'étendant le long de la longueur du bâti de palette, lesquelles poutres latérales fournissant de préférence une surface de patin du côté du transport du bâti de palette, et fournissent de préférence un support sur le côté opposé.

8. Palette d'installation d'accessoire selon une ou plusieurs des revendications précédentes, dans laquelle les poutres latérales longitudinales avec un côté forment la partie la plus haute de la palette et avec un côté opposé, forment la partie la plus basse de la palette lorsque la palette est dans sa position de transport et que les sections de pont pivotantes sont dans la position pliée.

9. Palette d'installation d'accessoire selon une ou plusieurs des revendications précédentes, dans laquelle le bâti de palette comprend une ou plusieurs poutres de levage, lesquelles poutres de levage sont montées de manière pivotante sur le bâti de palette de sorte qu'elles peuvent être pivotées entre une position pliée, dans laquelle la poutre de levage est positionnée de manière adjacente au bâti de palette, de préférence à l'intérieur du bâti de palette, et une position étendue, dans laquelle position étendue, la poutre de levage, du côté de support du bâti de palette, s'étend dans une direction à distance du bâti de palette, pour permettre le levage de l'équipement lorsque la palette est maintenue dans la position de support.

10. Palette d'installation d'accessoire selon une ou plusieurs des revendications précédentes, dans laquelle la palette, en particulier une ou plusieurs des sections de pont pivotantes, comprennent une ouverture de passage, de préférence en combinaison avec une porte ou panneau qui peut être monté(e) dans l'ouverture pour fermer l'ouverture de passage, qui permet à une personne de passer à travers la palette du côté de transport au côté de support, pour fournir à une personne l'accès à une section de pont lorsque la palette est maintenue dans la position de support.

11. Palette d'installation d'accessoire selon une ou plusieurs des revendications précédentes, dans laquelle la palette comprend une ou plusieurs sections de pont pivotantes, lesquelles sections de pont pivotantes sont montées de manière pivotante dans le bâti de palette, de sorte que chacune des sections de pont peut pivoter entre une position pliée, dans laquelle la section de pont est positionnée de manière adjacente au bâti de palette, de préférence à l'intérieur du bâti de palette, et une position étendue dans laquelle la section de pont du côté du transport du bâti de palette s'étend dans une direction à distance du bâti de palette.

12. Palette d'installation d'accessoire selon une ou plusieurs des revendications précédentes, dans laquelle la palette comprend des actionneurs hydrauliques pour faire pivoter les sections de pont pivotantes entre la position pliée et la position étendue par rapport au bâti de palette, lesquels actionneurs comprennent de préférence des connecteurs, de préférence des connecteurs à raccord rapide, pour raccorder les actionneurs aux connecteurs, de préférence les connecteurs à raccord rapide, de préférence positionnés dans le manipulateur de PLET, d'une source d'énergie hydraulique.

13. Système de manipulation de PLET (30) comprenant un manipulateur de PLET (2) et une palette d'installation d'accessoire (1) selon une ou plusieurs des revendications précédentes, laquelle palette d'installation (1) est adaptée pour se coupler avec le manipulateur de PLET (2) de sorte que le manipulateur de PLET (2) peut faire pivoter la palette d'installation (1) entre sa position de transport et sa position de support, et dans lequel le manipulateur de PLET (2) est de préférence prévu avec des rails de patin qui permettent à la palette d'installation de glisser sur le manipulateur de PLET (2) lorsque le manipulateur de PLET (2) est dans une position abaissée, lesquels rails sont de préférence alignés avec les rails sur le pont d'un navire lorsque le manipulateur de PLET (2) est dans la position abaissée de sorte que le bâti de palette (8) peut glisser du pont sur le manipulateur de PLET (2) et vice versa ;
et/ou
le manipulateur de PLET (2) comprend de préférence un bras de levage inclinable (33) et un lit de support (20), lequel lit de support (20) est adapté pour se coupler avec la palette d'installation (1), et lequel lit de support (20) est supporté de manière pivotante par le bras de levage (33) au niveau d'une extrémité et est raccordé au bras de levage (33) via des vérins hydrauliques (21) au niveau d'une extrémité opposée, lesquels vérins hydrauliques (21) permettent le pivotement du lit (20) par rapport au bras de levage (33) pour aligner le lit (20) et donc la palette d'installation (1) couplée au lit (20), par rapport au câble de tir (6).

14. Navire (5) comprenant un système de manipulation de PLET selon la revendication 13, le navire (5) comprenant en outre une tour de pose de canalisation (4), par exemple une tour de pose en J, de préférence une tour de pose de canalisation pivotante, et un manipulateur de PLET (2) pour amener une PLET dans le câble de tir (6), dans lequel la tour de pose de canalisation (4) comprend de préférence un bâti en A, et le manipulateur de PLET (2) est configuré pour introduire une PLET dans le câble de tir (6) par une ouverture d'accès définie par le bâti en A de la tour de pose de canalisation (4).

15. Procédé pour fournir une plateforme de travail adjacente à un câble de tir (6), le procédé comprenant les étapes consistant à :
prévoir une palette d'installation d'accessoire (1) selon une ou plusieurs des revendications 1 à 12 ;
faire pivoter la palette d'installation (1) d'une position de transport, dans laquelle la palette d'installation (1) a une orientation sensiblement horizontale, dans une position de support dans laquelle la palette d'installation (1) a une orientation sensiblement verticale ;
supporter la palette d'installation d'accessoire (1) dans la position de support adjacente au câble de tir (6) ;
faire pivoter au moins l'une des une ou plusieurs des sections de pont pivotantes (13) dans la position étendue, de sorte que la au moins une section de pont pivotante (13) fournit une plateforme de travail adjacente au câble de tir (6).
